(19) Europäisches Patentamt
European Patent Office
Office européen des brevets

(11) **EP 3 378 337 A1**

(12) **EUROPEAN PATENT APPLICATION**

(43) Date of publication:
**26.09.2018 Bulletin 2018/39**

(21) Application number: **17161996.8**

(22) Date of filing: **21.03.2017**

(51) Int Cl.:
*A23P 30/30* (2016.01)    *A23L 5/10* (2016.01)
*A23L 7/161* (2016.01)    *A23L 7/174* (2016.01)
*A23L 7/183* (2016.01)    *A21B 5/00* (2006.01)
*G07F 17/00* (2006.01)    *A47J 27/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Koninklijke Philips N.V.**
**5656 AE Eindhoven (NL)**

(72) Inventors:
• **KUI, Xiaoyun (Shirley)**
**5656 AE Eindhoven (NL)**

• **CHEN, Lisa H.**
**5656 AE Eindhoven (NL)**
• **WANG, Yanyan**
**5656 AE Eindhoven (NL)**
• **XU, Hai Di**
**5656 AE Eindhoven (NL)**

(74) Representative: **de Haan, Poul Erik et al**
**Philips International B.V.**
**Philips Intellectual Property & Standards**
**High Tech Campus 5**
**5656 AE Eindhoven (NL)**

(54) **METHOD AND APPARATUS FOR PUFFING GRAIN**

(57)    There is provided an apparatus (100) and method (200) of puffing grain food. The puffing chamber is pre-heated, and the moisture loss from the grain food during the puffing process is determined and the temperature controlled based on the determined moisture loss, until a desired end moisture content of the puffed grain food is obtained.

Figure 1

**Description**

TECHNICAL FIELD OF THE INVENTION

The invention relates to a method and an apparatus for producing a puffed grain food, such as a table-top domestic device such as may be used for puffing rice.

BACKGROUND TO THE INVENTION

Popping or puffing grains and corn is one of the most popular methods for making a healthy snack. The popping or puffing process involves superheating the grains to create superheated steam from water present in the grain, to melt or gelatinize the starch granule. The superheated steam also causes a pressure increase in the grain, leading eventually to rupture of the outer layer, followed by an increase in grain volume (puffing) and curing of the puffed structure.

When water loss from evaporation at high temperature occurs, a puffed grain tends to burn through carbonization. This burning occurs very quickly after puffing, with a well-popped grain transforming to an over-heated and burned grain within a matter of seconds, due to the very low moisture content in the popped grain. Not only is the burned product not visually appealing, due to discoloration, but the taste is also not appealing.

However, temperature sensors of traditional puffing devices are not accurate or reliable and the actual temperature normally fluctuates by at least 10 °C. No matter what kind of heating source is applied, the high temperatures required for puffing (~200 °C) are not straightforward to control in a small operating range in existing devices. Although stability of temperature is important to ensure good quality of the puffed grain food (lower temperature can cause low yield, and high temperature can cause a burned effect as described above), accurately controlling the temperature and the heating time in practical terms is difficult to achieve for consumers, who may not know when to end the puffing process.

Thus, there is a need for an improved apparatus and method for puffing grains.

SUMMARY OF THE INVENTION

As noted above, a limitation of existing methods and apparatus is that it is not possible to accurately control the puffing process when puffing or popping grain food, with a puffed grain food very quickly burning after puffing, leaving a discolored food with an undesirable taste.

Therefore, according to an aspect of the invention, there is provided a method for producing a puffed grain food, the method comprising:

preheating a puffing apparatus;
placing a grain food to be puffed into the puffing apparatus wherein the grain food has a predetermined initial moisture content;
determining moisture loss from the grain food in the puffing apparatus; and
controlling the temperature of the puffing apparatus based on the determined moisture loss from the grain food and the predetermined initial moisture content, thereby producing the puffed grain food having a predetermined end moisture content.

In some embodiments, the temperature of the puffing apparatus may be controlled until the predetermined end moisture content is obtained.

In some embodiments, the rate of moisture loss may be determined.

In some embodiments, controlling the temperature of the puffing apparatus may comprise one or more of:

decreasing the temperature when the rate of moisture loss exceeds a predetermined rate of moisture loss;
increasing the temperature when the rate of moisture loss is below a predetermined rate of moisture loss; and
maintaining the temperature when the rate of moisture loss corresponds to a predetermined rate of moisture loss.

In some embodiments, the steps of determining a rate of moisture loss from the grain food, and controlling the temperature of the puffing apparatus based on the determined rate of moisture loss from the grain food, may be repeated until the determined rate of moisture loss corresponds to a predetermined rate of moisture loss.

In some embodiments, the rate of moisture loss may be determined by monitoring the weight of the grain food over time or by monitoring the humidity within the puffing apparatus over time.

In some embodiments, the grain food may comprise a cereal grain or a pellet of grain flour dough.

In some embodiments, the grain food to be puffed may be pre-treated with one or more of steam, water or heat until the predetermined initial moisture content is obtained.

In some embodiments, the puffing apparatus may be pre-heated based on the predetermined initial moisture content.

In some embodiments, the puffing apparatus may be pre-heated to a temperature of at least 140 °C.

In some embodiments, the puffing apparatus may be pre-heated at a predetermined power input for a predetermined period of time.

According to an aspect of the invention, there is provided an apparatus for puffing food, the device comprising:

> a puffing chamber;
> a heating element in thermal contact with the puffing chamber; and
> a sensor disposed within the puffing chamber for determining the moisture loss from a food to be puffed.

In some embodiments, the sensor may comprise a weight sensor or a humidity sensor.

In some embodiments, the apparatus may comprise a control unit configured to:

> receive information from the sensor;
> determine one or more of moisture loss and rate of moisture loss based on the received information;
> compare the determined one or more of moisture loss and rate of moisture loss to one or more of a predetermined end moisture content and a predetermined rate of moisture loss respectively; and
> control the temperature of the apparatus based on one or more of the comparison of the determined moisture loss to the predetermined end moisture content and the comparison of the determined rate of moisture loss to a predetermined rate of moisture loss.

According to an aspect of the invention, there is provided computer program product comprising a computer readable medium having computer readable code embodied therein, the computer readable code being configured such that, on execution by a control unit of a puffing apparatus for producing puffed grain foods, the control unit is caused to perform the method of the first aspect.

According to the aspects and embodiments described above, the limitations of existing methods and apparatus are addressed through the realisation that the extent and rate of water loss are key to controlling the degree of puffing and burning of puffed grains. For example, it is possible in a domestic situation to puff grains to a desirable degree of puffing, texture, taste and visual appearance without burning the grains. In this way, it is now possible in the home to enjoy puffed grains, for example puffed rice.

There is thus provided an improved apparatus and method for puffing grain foods, which overcome the existing problems.

BRIEF DESCRIPTION OF THE DRAWINGS

For a better understanding of the invention, and to show more clearly how it may be carried into effect, reference will now be made, by way of example only, to the accompanying drawings, in which:

> Figure 1 is a block diagram of an apparatus according to an embodiment;
> Figure 2 is a flow chart illustrating a method of operating an apparatus to puff grain foods according to an embodiment; and
> Figure 3 is a flow chart illustrating a method of operating an apparatus to puff grain foods according to an embodiment.

DETAILED DESCRIPTION OF THE PREFERRED EMBODIMENTS

Conventional grain puffing apparatuses superheat grain foods in a puffing chamber, which leads to rapid evaporation of residual moisture in the grain food and expansion or puffing of the grain or pellet. However, accurate control of the puffing conditions is not straightforward, and a puffed product can very quickly burn and become unpalatable, and existing devices do not have an automatic switch off when the puffing process is complete. As noted above, the invention provides an improved apparatus and method, which overcome the existing problems, based on monitoring moisture loss rather than temperature.

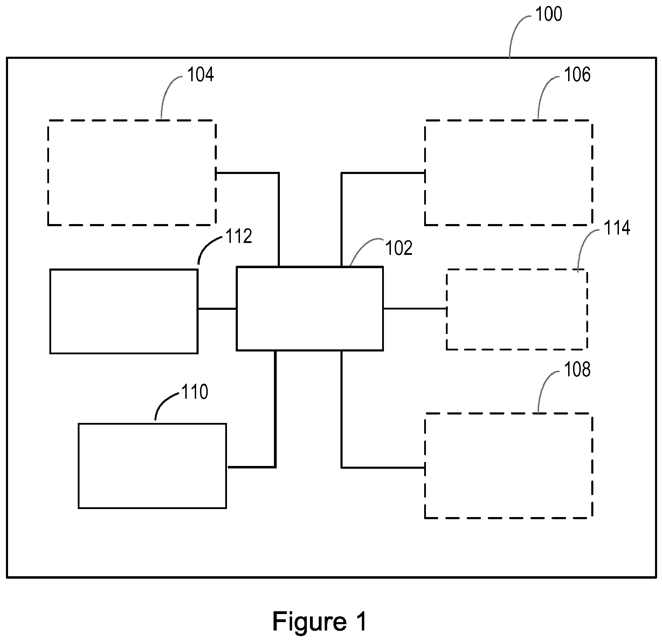

Figure 1 shows a block diagram of an apparatus 100 according to an embodiment that can be used for puffing grain foods.

Generally, the apparatus 100 may comprise a table-top domestic appliance, such as a domestic grain puffing device and has as its components those usually found in such an appliance. In an embodiment, the apparatus 100 comprises a puffing chamber (not shown) in which the grain food is puffed. The apparatus 100 may further comprise a lid or cover to seal the puffing chamber during the puffing process.

The apparatus 100 comprises a control unit 102 that controls the operation of the apparatus 100 and that can implement the method described herein. The control unit 102 can comprise one or more processors, control units, multi-core processors or modules that are configured or programmed to control the apparatus 100 in the manner described herein. In particular implementations, the control unit 102 can comprise a plurality of software and/or hardware modules that are each configured to perform, or are for performing, individual or multiple steps of the method according to embodiments of the invention.

Briefly, the control unit 102 of the apparatus 100 is configured to control the operating of the heating element 110, and to receive data from the sensor 112 of the apparatus, as will be described later.

Returning back to the illustrated embodiment of Figure 1, in this illustrated embodiment, the apparatus 100 comprises the user interface 104 that is controlled by the control unit 102. Alternatively, the user interface 104 maybe external to (i.e. separate to or remote from) the apparatus 100. For example, the user interface 104 may be part of another device. The user interface 104 allows a user to program and operate the apparatus 100 to puff a grain food.

The user interface 104 may also be for use in providing the user of the apparatus 100 with information resulting from the method according to the invention. The control unit 102 maybe configured to control the user interface 104 to provide information resulting from the method according to the invention. For example, in some embodiments, the control unit 102 of the apparatus 100 maybe configured to control the user interface 104 to render (or output) information associated with one or more actions initiated by the control unit 102, for example an output when a particular step of the method is complete, or an output relating to the temperature of the apparatus 100.

The user interface 104 may also be configured to receive a user input. In other words, a user interface 104 may allow the user to manually enter data, instructions, or information, such as temperature and duration of a particular step of the method.

Thus, the user interface 104 maybe or may comprise any component that enables rendering or output of information, data or signals to the user. Alternatively or in addition, the user interface 104 may be or may comprise any component that enables the user to provide a user input, interact with and/or control the apparatus 100. For example, the user interface 104 may comprise one or more switches, one or more buttons, a keypad, a keyboard, a touch screen or an application (for example, on a tablet or smartphone), a display screen or any other visual rendering component, one or more lights, one or more speakers or any other audio rendering component, or any other user interface component, or combination of user interface components.

In some embodiments (such as the illustrated embodiment of Figure 1), the apparatus 100 may comprise a memory unit 106 configured to store program code that can be executed by the control unit 102 to perform the method described herein. The memory unit 106 can also be used to store information, data, signals and measurements made or acquired by the control unit 102 of the apparatus 100 or by components, interfaces, units, and devices that are external to the apparatus 100. Thus, for example, the memory unit 106 of the apparatus 100 may be configured to store one or more actions to determine moisture loss of a grain food being puffed, operating temperatures or heating power inputs required based on the determined moisture loss, and the duration of any such actions, as well as suitable time periods between each action, and the control unit 102 maybe configured to acquire at least one action from the memory unit 106 to initiate such actions. Memory unit 106 may also be configured to store look-up tables for correlating between puffing temperature, initial and end moisture content and rate of moisture loss, and the control unit 102 may be configured to acquire at least suitable puffing temperatures from the memory unit 102 based on at least one of initial moisture content, end moisture content, determined moisture loss and determined rate of moisture loss, and control the temperature of the puffing apparatus accordingly.

Returning back to Figure 1, in some embodiments, the apparatus 100 may also comprise a communications interface (or circuitry) 108 for enabling the apparatus 100 to communicate with (or connect to) any components, interfaces, units, and devices that are internal or external to the apparatus 100, such as heating element 110 or sensor 112. The communications interface 108 may communicate with any components, interfaces units, and devices wirelessly or via a wired connection. For example, in embodiments where the user interface 104 is external to the apparatus 100, the communications interface 108 may communicate with the external user interface wirelessly or via a wired connection. Similarly, in embodiments where one or more memory units 106 are external to the apparatus 100, the communications interface 108 may communicate with the external memory units wirelessly or via a wired connection.

Returning to Figure 1, apparatus 100 comprises heating element 110, which is in thermal contact with a puffing chamber of the apparatus (not shown). The heating element may be any type of heating element as is usually found in such appliances, and is controlled by control unit 102 to establish a predetermined temperature in the puffing chamber, based on one or more of user input or a program stored in the memory unit 106. Different types of heating elements are known in the art and do not need detailed discussion. In one embodiment, the puffing chamber may comprise the heating element 110. In one embodiment, the walls of the puffing chamber may comprise the heating element 110. For example, the puffing chamber maybe formed of a metallic material, and power may be supplied directly to the puffing chamber. Thus, references herein to heating the heating element 110, or providing power to the heating element 110 in order to heat it are to be understood as also including heating the puffing chamber, or providing power to the puffing chamber in order to heat it.

The operation of the heating element 110 allows heat to be provided to a puffing chamber of the apparatus (not shown in Figure 1) at any stage of the methods described herein.

In one embodiment, the operation of the heating element 110 is controlled based on data acquired from sensor 112, as will be described later. In other embodiments, the operation of the heating element 110 is controlled by control unit 102 based on data acquired from the optional sensor 114, as will be described later. In other embodiment, the operation of the heating element 110 is controlled based on data acquired from sensor 112 and from sensor 114, as will be described later.

For example, the control unit 102 may control the heating element 110 to pre-heat the puffing chamber to a temperature of less than 250 °C. In one embodiment, the control unit 102 may control the heating element 110 to pre-heat the puffing chamber to a temperature of less than 240 °C, for example less than 230 °C, for example less than 220 °C, for example less than 210 °C, for example less than 200 °C, for example less than 190 °C, for example less than 180 °C, for example less than 170 °C, for example less than 160 °C, for example less than 150 °C, for example about 140 °C. In one embodiment, the control unit 102 may control the heating element 110 to pre-heat the puffing chamber to a temperature of greater than 140 °C, for example greater than 150 °C, for example greater than 160 °C, for example greater than 170 °C, for example greater than 180 °C, for example greater than 190 °C, for example greater than 200 °C, for example greater than 210 °C, for example greater than 220 °C, for example greater than 230 °C, for example greater than 240 °C, for example about 250 °C.

In one embodiment, the control unit 102 may control the heating element 110 to provide a temperature as described above for a pre-heating step for a period of at least 5 minutes, for example at least 10 minutes, for example at least 15 minutes, for example about 20 minutes. In one embodiment, the control unit 102 may control the heating element to provide a temperature as described above for a pre-heating step for a period of less than 20 minutes, for example less than 15 minutes, for example less than 10 minutes, for example about 5 minutes.

In one embodiment, the control unit 102 may control the heating element 110 to provide a temperature as described above for a pre-heating step based on the initial moisture content of the grain food to be puffed. For example, for an initial moisture content in the range of 14 to 15 % (on a wt./wt. percentage basis), the control unit 102 may control the heating element to pre-heat the puffing apparatus to a temperature of approximately 200 °C. In another example, for an initial moisture content of less than 5 % (on a wt./wt. percentage basis), the control unit 102 may control the heating element to pre-heat the puffing apparatus to a temperature of approximately 140 °C.

In one embodiment, the control unit 102 may control a power supply to pre-heat the puffing chamber at a predetermined power input via heating element 110. In one embodiment, the power supply may pre-heat the puffing chamber at a predetermined power input for a predetermined period of time via heating element 110.

In one embodiment, the control unit 102 may control a power supply to provide sufficient power to the heating element 110 to pre-heat the puffing chamber to the temperatures mentioned above. In one embodiment, the control unit 102 may control a power supply to provide sufficient power to the heating element 102 to pre-heat the puffing chamber for a period of at least 5 minutes, for example at least 10 minutes, for example at least 15 minutes, for example about 20 minutes. In one embodiment, the control unit 102 may control a power supply to provide sufficient power to the heating element 110 to pre-heat the puffing chamber for a period of less than 20 minutes, for example less than 15 minutes, for example less than 10 minutes, for example about 5 minutes.

As will be appreciated, it is possible to calculate the power needed to approximately heat the heating element 110 and the puffing chamber to any given temperature using the mass and the specific heat capacity of the heating element 110 and/or the specific heat capacity of the material from which the puffing chamber is manufactured in the following equations:

$$Q(\text{heating energy}) = \text{Power x time} \qquad (\text{Equation 1})$$

$$Q(\text{heating energy}) = c(\text{specific heat capacity}) \times (\text{mass}) \times \varDelta T \qquad (\text{Equation 2})$$

Alternatively, for any given power input, for a defined period of time, it is possible to estimate the temperature of the heating element 110 and/or puffing chamber.

In one embodiment, the control unit 102 may control the heating element 110 to control the temperature of the puffing chamber to a temperature of less than 250 °C during a puffing step. In one embodiment, the control unit 102 may control the heating element 110 to control the temperature of the puffing chamber to a temperature of less than 240 °C, for example less than 230 °C, for example less than 220 °C, for example less than 210 °C, for example less than 200 °C, for example less than 190 °C, for example less than 180 °C, for example less than 170 °C, for example less than 160 °C, for example less than 150 °C, for example about 140 °C during a puffing step. In one embodiment, the control unit 102 may control the heating element 110 to control the temperature of the puffing chamber to a temperature of greater than 140 °C, for example greater than 150 °C, for example greater than 160 °C, for example greater than 170 °C, for example greater than 180 °C, for example greater than 190 °C, for example greater than 200 °C, for example greater than 210 °C, for example greater than 220 °C, for example greater than 230 °C, for example greater than 240 °C, for example about 250 °C in a puffing step.

In one embodiment, the control unit 102 may control the heating element 110 to control the temperature as described above for a puffing step for a period of at least 5 seconds, for example at least 10 seconds, for example at least 15 seconds, for example at least 20 seconds, for example at least 30 seconds, for example at least 40 seconds, for example at least 50 seconds, for example about 60 seconds. In one embodiment, the control unit 102 may control the heating element to control the temperature as described above for a puffing step for a period of less than 60 seconds, for example less than 50 seconds, for example less than 40 seconds, for example less than 30 seconds, for example less than 20 seconds, for example less than 15 seconds, for example less than 10 seconds, for example about 5 seconds. It will be understood that a higher puffing temperature may require a shorter duration of puffing time, while a lower puffing temperature may require a longer duration of puffing time.

In one embodiment, the control unit 102 may control a power supply at a predetermined power input via heating element 110 to control the temperature of the puffing chamber in a puffing step. In one embodiment, the power supply may control the temperature of the puffing chamber at a predetermined power input for a predetermined period of time via heating element 110.

In one embodiment, the control unit 102 may control a power supply to provide sufficient power to the heating element 110 to control the temperature of the puffing chamber within the temperatures mentioned above in a puffing step. In one embodiment, the control unit 102 may control a power supply to provide sufficient power to the heating element 110 to control the temperature of the puffing chamber for a period of at least 5 seconds, for example at least 10 seconds, for example at least 15 seconds, for example at least 20 seconds, for example at least 30 seconds, for example at least 40 seconds, for example at least 50 seconds, for example about 60 seconds. In one embodiment, the control unit 102 may control a power supply to provide sufficient power to the heating element to control the temperature of the puffing chamber for a period of less than 60 seconds, for example less than 50 seconds, for example less than 40 seconds, for example less than 30 seconds, for example less than 20 seconds, for example less than 15 seconds, for example less than 10 seconds, for example about 5 seconds. It will be understood that a higher puffing temperature may require a shorter duration of puffing time, while a lower puffing temperature may require a longer duration of puffing time.

In one embodiment, the control unit 102 may control the temperature of the puffing apparatus based on one or more of the determined moisture loss, the determined rate of moisture loss from the grain food and the predetermined initial moisture content, as will be described later.

In one embodiment, the control unit 102 may control the temperature of the puffing apparatus based on the determined moisture loss and the predetermined initial moisture content. The control unit 102 may control the temperature by maintaining the power supplied to the heating element until the predetermined or desired end moisture content of the puffed grain food is achieved or obtained.

In one embodiment, the control unit 102 may control the temperature of the puffing apparatus by decreasing the temperature when the rate of moisture loss exceeds a predetermined rate of moisture loss. In another embodiment, the control unit 102 may control the temperature of the puffing apparatus by increasing the temperature when the rate of moisture loss is below a predetermined rate of moisture loss. In another embodiment the control unit 102 may control the temperature of the puffing apparatus by maintaining the temperature when the rate of moisture loss corresponds to a predetermined rate of moisture loss.

In one embodiment, the steps of determining a rate of moisture loss from the grain food, and controlling the temperature of the puffing apparatus based on the determined rate of moisture loss from the grain food, are repeated until the determined rate of moisture loss corresponds to a predetermined rate of moisture loss. In one embodiment, once the determined rate of moisture loss corresponds to the predetermined rate of moisture loss, the control unit 102 may control heating element 110 to maintain the temperature of the puffing chamber for the remainder of the puffing step. In one embodiment, the control unit 102 may maintain the temperature of the puffing apparatus for the remainder of the method as described above until a predetermined end moisture content is obtained.

As also shown in Figure 1, apparatus 100 further comprises sensor 112, which is controlled by and send acquired data to control unit 102. In place of the conventional temperature sensor (such as a thermocouple) usually found in such an apparatus, sensor 112 is configured to acquire data relating to moisture loss from the grain food being puffed.

In one embodiment, sensor 112 comprises a weight sensor, and senses, measures or monitors the weight of the grain food, for example the weight of the grain food over time. In one embodiment, sensor 112 comprises a weight sensor and is disposed in the puffing chamber, and directly senses, measures or monitors the weight of the grain food during puffing. By sensing, measuring or monitoring weight of the grain food, it is possible to monitor the puffing process and stop providing heat to the puffing apparatus once a predetermined moisture content of the puffed grain food is obtained or achieved. In one embodiment, by sensing, measuring or monitoring weight of the grain food over time, a rate of weight loss, and thus a rate of moisture loss can be determined. In one embodiment, sensor 112 comprises a weight sensor and is arranged underneath the puffing chamber and senses, measures or monitors the weight of the puffing chamber containing the grain food over time. In one embodiment, sensor 112 comprises a humidity sensor, and senses, measures or monitors humidity within the puffing chamber of apparatus 100, for example over time. By sensing, measuring or monitoring humidity within the puffing chamber, it is possible to monitor the puffing process and stop providing heat to the puffing apparatus once a predetermined moisture content of the puffed grain food is obtained or achieved, In one embodiment, by sensing, measuring or monitoring humidity within the puffing chamber over time, a rate of moisture loss from the grain food can be determined.

In one embodiment, control unit 102 acquires data from sensor 112 at two different timepoints, and determines one or more of absolute moisture loss, and a rate of moisture loss from the food grain being puffed based on the acquired data. In one embodiment, control unit 102 acquires weight data from sensor 112 at two different timepoints, and determines one or more of absolute moisture loss, and a rate of moisture loss from the food grain being puffed based on the acquired weight data. In an alternative embodiment, control unit 102 acquires humidity data from sensor 112 at two different timepoints, and determines one or more of absolute moisture loss, and a rate of moisture loss from the food grain being puffed based on the acquired humidity data. In one embodiment, control unit 102 acquires data from sensor 112 at time periods of at least every second, for example at least every 2 seconds, for example at least every 3 seconds, for example at least every 4 seconds, for example at least every 5 seconds, for example at least every 10 seconds, for example at least every 15 seconds, for example at least every 20 seconds.

In one embodiment, the control unit 102 controls the temperature of the puffing chamber based on at least one of the determined initial moisture content, the determined moisture loss, the determined rate of moisture loss and the predetermined end moisture content, to ensure a quality assured puffed produced by a reliable and repeatable process.

In one embodiment, control unit 102 acquires data from sensor 112 at time periods at intervals of at least every 5 seconds, for example at least every 10 seconds, and controls heating element 110 until a determined rate of moisture loss from the grain food corresponds with a predetermined rate of moisture loss.

In one embodiment, control unit 102 acquires data from sensor 112 at time periods at intervals of at least every 5 seconds, for example at least every 10 seconds, until a predetermined end moisture content of the puffed grain food is obtained.

In one embodiment, the control unit 102 determines a rate of moisture loss during a puffing process and controls the temperature of the puffing apparatus 100 based on the determined rate of moisture loss and a predetermined rate of moisture loss. In one embodiment, the control unit 102 controls the temperature of the puffing apparatus 100 so that the determined rate of moisture loss corresponds to the predetermined rate of moisture loss.

In one embodiment, the control unit 102 controls the temperature of the puffing apparatus 100 to obtain a rate of moisture loss per second of less than 5 % (expressed as a weight percentage, i.e. a rate of moisture loss of less than 5 % (wt./wt) / second), for example less than 4 %, for example less than 3 %, for example less than 2 %, for example less than 1 %, for example less than 0.5 %, for example less than 0.4 %, for example less than 0.3 %, for example a rate of moisture loss of about 0.2 % (wt./wt.) per second.

In one embodiment, the control unit 102 controls the temperature of the puffing apparatus 100 to obtain a rate of moisture loss per second of greater than 0.2 % (expressed as a weight percentage, i.e. a rate of moisture loss of greater than 0.2 % (wt./wt) / second), for example greater than 0.3 %, for example greater than 0.4 %, for example greater than 0.5 %, for example greater than 1 %, for example greater than 2 %, for example greater than 3 %, for example greater than 4 %, for example a rate of moisture loss of about 5 % (wt./wt.) per second.

In one embodiment, the control unit 102 controls the temperature of the puffing apparatus 100 to obtain a rate of moisture loss per minute of less than 20 % (expressed as a weight percentage, i.e. a rate of moisture loss of less than 20 % (wt./wt) / minute), for example less than 15 %, for example less than 10 %, for example less than 5 %, for example less than 4 %, for example less than 3 %, for example less than 2 %, for example a rate of moisture loss of about 1 % (wt./wt.) per minute.

In one embodiment, the control unit 102 controls the temperature of the puffing apparatus 100 to obtain a rate of moisture loss per minute of greater than 1 % (expressed as a weight percentage, i.e. a rate of moisture loss of greater than 1 % (wt./wt) / minute), for example greater than 2 %, for example greater than 3 %, for example greater than 4 %, for example greater than 5 %, for example greater than 10 %, for example greater than 15 %, for example a rate of moisture loss of about 20 % (wt./wt.) per minute.

In such embodiments, the rate of moisture loss is determined according to the following equation:

$$Rate\ of\ moisture\ loss = \frac{(initial\ weight\ of\ grain\ -\ current\ weight\ of\ grain)}{Popping\ duration} \times 100$$

(Equation 3)

In one embodiment, the control unit 102 controls the temperature of the puffing apparatus 100 by adjusting power to heating element 110 based on the determined rate of moisture loss. For example, when the determined rate of moisture loss exceeds a predetermined rate of moisture loss, control unit 102 may control a power supply to provide less power to heating element 110, resulting in a decrease in temperature in the puffing apparatus. Alternatively, when the determined rate of moisture loss is below a predetermined rate of moisture loss, control unit 102 may control a power supply to provide more power to heating element 110, resulting in an increase in temperature in the puffing apparatus. In another embodiment, when the determined rate of moisture loss corresponds to a predetermined rate of moisture loss, the control unit 102 may control a power supply to provide the same power to heating element 110, resulting in maintenance of the existing temperature in the puffing apparatus.

In one embodiment, the control unit 102 determines a rate of moisture loss and controls the temperature of the puffing apparatus 100 based on a predetermined or desired end moisture content, a determined initial moisture content and intermediate weights of the grain food during the puffing process, i.e. the determined rate of moisture loss. In some embodiments, the control unit 102 controls the heating element 110 to control the temperature of the puffing apparatus 100 until the predetermined end or final moisture content is obtained.

In some embodiments, the predetermined end or final moisture content (represented as a wt./wt. percentage), may be at least 4 %, for example at least 5 %, for example at least 6 %, for example at least 7 %, for example at least 8 %, for example at least 9 %, for example about 10 %. In some embodiments, the predetermined end or final moisture content (represented as a wt./wt. percentage), maybe less than 10 %, for example less than 9 %, for example less than 8 %, for example less than 7 %, for example less than 6 %, for example less than 5 %, for example about 4 %. In the example of puffed rice, an end moisture content of no less than 4 % results in a puffed product which is white in color, with no discoloration due to burning. In such embodiments, the predetermined end or final moisture content is calculated according to the following equation:

$$Predetermined\ final\ moisture\ content = initial\ moisture\ content - \frac{(initial\ weight\ of\ grain\ -\ current\ weight\ of\ grain)}{initial\ weight\ of\ grain}$$

(Equation 4)

In an embodiment in which the puffing apparatus is configured to puff from 10 g to for example 300 g of grain food, and the control unit 102 acquires data from a weight sensor 112 to control the temperature of the puffing step by monitoring moisture loss, weight sensor 112 maybe accurate enough to monitor moisture loss to an accuracy of from 0.01 g to 0.1 g. In contrast, if a weight sensor 112 is used to determine a rate of moisture loss, it may need to have an accuracy of from 0.001 g to 0.1 g.

As also shown in Figure 1, in one embodiment, apparatus 100 may comprise a further sensor 114, which is controlled by and sends data to control unit 102. Sensor 114 comprises a temperature sensor configured to acquire data relating to one or more of the temperature in the puffing chamber and the temperature of heating element 110. Sensor 114 therefore comprises any known sensor capable of monitoring temperature, such as a thermocouple, and is optionally used in combination with sensor 112 to control the puffing process.

In one embodiment, sensor 114 comprises a temperature sensor, and senses, measures or monitors the temperature of one or more of the heating element 110 and the puffing chamber during one or both of the pre-heating and puffing steps of the methods described.

In one embodiment, control unit 102 acquires data in the form of temperature data from sensor 114 and controls heating element 110 to provide heating power to the puffing chamber as described previously. In one embodiment, sensor 114 provides data to control unit 102 to control heating element 110 during a pre-heating step as described previously. In one embodiment, sensor 114 provides data to control unit 102 to control heating element 110 during a puffing step as described previously. In one embodiment, control unit 102 controls the temperature of the pre-heating step based on data acquired from sensor 114. In one embodiment, control unit 102 controls the temperature of the puffing step based on data acquired from sensor 114. For example, in a puffing step, control unit 102 acquires data from sensor 114 and adjusts the power input to heating element 110 to maintain the temperature within the puffing chamber approximately constant until a predetermined end moisture content of the puffed grain food is obtained.

In one embodiment, sensor 114 is used in combination with sensor 112 during the methods described herein. This allows for accurate control of the puffing method by monitoring not only moisture loss, but also the temperature within the puffing chamber. Due to this parallel monitoring, each of sensors 112 and 114 can be of lower sensitivity or accuracy relative to the situation in which each of sensors 112 and 114 was used on its own. In an embodiment in which the puffing apparatus is configured to puff from 10 g to for example 300 g of grain food, and the control unit 102 acquires data from a weight sensor 112 to control the temperature of the puffing step by monitoring moisture loss, in combination with data acquired from a temperature sensor 114, weight sensor 112 maybe accurate enough to monitor moisture loss to an accuracy of from 0.01 g to 0.1 g.

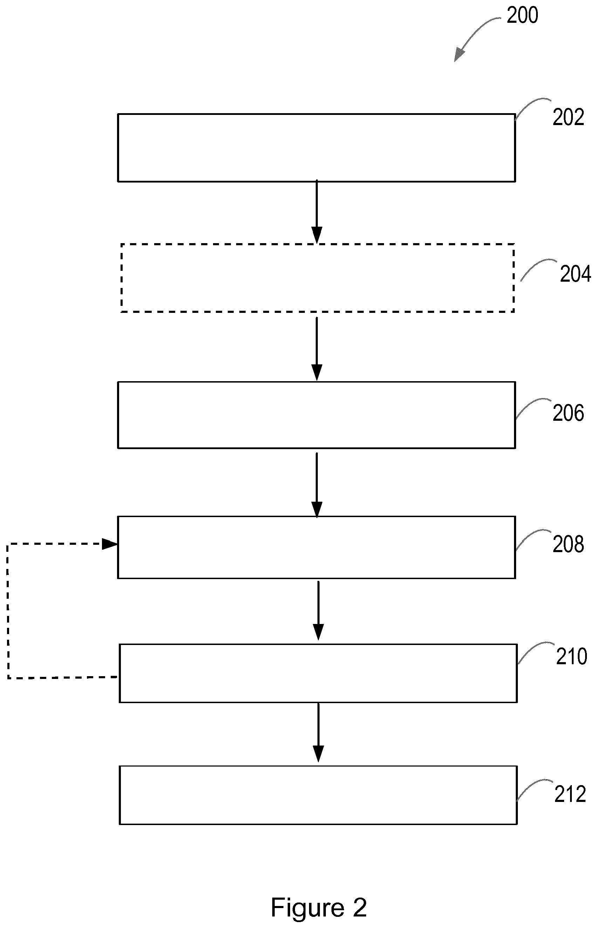

Figure 2 is a flow chart illustrating a method of puffing grain food according to one embodiment. In the described embodiment, method 200 may be controlled by control unit 102 of apparatus 100, but it will be understood that the method maybe controlled separately. In step 202 of method 200, a puffing chamber of a puffing apparatus is pre-heated to a predetermined temperature, before the grain food to be heated is placed into the puffing chamber. Step 204 comprises an optional step of determining an initial moisture content of the grain food to be puffed. Then, in step 206, the grain food is placed into the puffing device. After the grain food has been placed in the pre-heated puffing chamber, in step 208 moisture loss is determined. Based on the determined moisture loss, the temperature inside the puffing chamber is controlled, in step 210. Optionally, the steps of determining moisture loss (208) and controlling the temperature (210) are repeated, until finally, in step 212, heating is ended when the predetermined end moisture content of the puffed grain food is achieved.

The methods described are suited to the puffing of any grain food. In one embodiment, the grain food comprises grains of rice, maize/corn (popcorn), barley, wheat, spelt, oats, sorghum and kamut. In one embodiment, the grain food is placed into the puffing apparatus raw. In an alternative embodiment, the grain food is pre-treated with one or more of steam, water or heat. In an alternative embodiment, the grain food is pre-treated with one or more of steam, water or heat until the predetermined initial moisture content is obtained. In an alternative embodiment, the grain food is pre-treated with one or more of steam, water or heat to at least partly gelatinize the starchy component of the grain food.

In one embodiment, the grain food comprises a dough of grain flour. In one embodiment, the grain flour dough is prepared and extruded into pellets, as is known in the art of puffing. In one embodiment, the extruded pellets are then at least partly dried to provide an outer shell which can trap residual moisture within the pellet to facilitate the superheating and puffing processes.

In step 202 of the method 200, the puffing chamber of the puffing apparatus is pre-heated to a predetermined temperature or for a predetermined time at a predetermined power as described previously. The pre-heating of the puffing chamber ensures that the rapid, superheating of the grain food to be puffed begins immediately upon the grain food being sealed in the puffing chamber.

In order for moisture loss to be determined and the process controlled until a predetermined end moisture content is obtained, it is necessary that the initial moisture content of the grain food to be puffed is known, along with a predetermined or desired end moisture content. In one embodiment, the initial moisture content is predetermined by the producer of the grain food and will be indicated on the packaging. Such pre-packaged grain foods typically have a moisture content of approximately 14 % (on a wt./wt. percentage basis). Thus, in one embodiment, the grain food has an initial moisture content of approximately 14 %. For grain food having an initial moisture content of approximately 14 %, there is no need to pre-treat the grain food to increase moisture content as described above. However, depending on the grain food and user preferences or requirements, it may be necessary to determine the initial moisture content separately, and adjust if required.

Thus, in step 204 of the method 200, optionally, an initial moisture content of the grain food is determined. In one embodiment, the initial moisture content is determined before the grain food is placed in the puffing chamber of the puffing apparatus. In an alternative embodiment, the initial moisture content may be determined based on techniques known in the art, such as measurement of the weight of a sample of the food grain before and after drying in an oven until a constant mass is obtained. In one embodiment, the initial moisture content may be obtained by controlled drying of the grain food, with or without any of the pre-treatments described previously. In one embodiment, an initial moisture content of about 14 % (expressed as a wt./wt. percentage) is desirable. In an alternative embodiment, the initial moisture content of the grain food is determined in the puffing chamber using a sensor. In this embodiment, the order of the steps 202 to 206 may or may not be reversed. In an alternative embodiment to the method shown in Figure 2, the steps of preheating a puffing apparatus (202), determining an initial moisture content (204) and placing the grain food into the puffing device (206) are reversed, and the puffing chamber is pre-heated to a predetermined temperature based on the predetermined initial moisture content. In another embodiment, the initial moisture content may be determined in the puffing chamber after pre-heating. Once the initial moisture content has been determined, a user may input this value into the apparatus as part of the method program. Based on the received user input, a pre-heating temperature and a popping temperature can be determined by a control unit of the apparatus. Alternatively, the apparatus may be provided with an information chart which correlates initial moisture content with suitable pre-heating and popping temperatures, and the user inputs desired pre-heating and popping temperatures into the apparatus.

In step 206 of the method 200, the grain food having a predetermined initial moisture content is placed into and heated in the puffing chamber, with the temperature of the puffing chamber being controlled as described previously.

In step 208 of the method 200, the moisture loss during the puffing process is determined as described previously. In one embodiment, the moisture loss is determined based on the weight loss of the grain food being puffed. In one embodiment, the moisture loss is determined based on the humidity increase in the puffing chamber. In one embodiment, the moisture loss is determined at least every 5 seconds, for example at least every 10 seconds, so that the moisture loss is determined repeatedly during the puffing process in order to monitor for the predetermined end moisture content.

Once a moisture loss from the grain food being puffed has been determined, the temperature of the puffing chamber is controlled in step 210 of the method 200. For example, the temperature of the puffing chamber may be maintained approximately constant until the predetermined end moisture content is obtained. For example, the power supplied to the puffing chamber may be maintained approximately constant until the predetermined end moisture content is obtained.

Finally, when a predetermined end moisture content of the puffed grain is obtained, the puffing method 200 is terminated in step 212. In one embodiment, termination of the puffing method comprises termination of heating, and a switching off of a power supply providing heating power to the puffing apparatus. Termination of the puffing method may also comprise at least one indicator to the user, for example an audible alarm, or notification on a user interface, that the puffing method is complete.

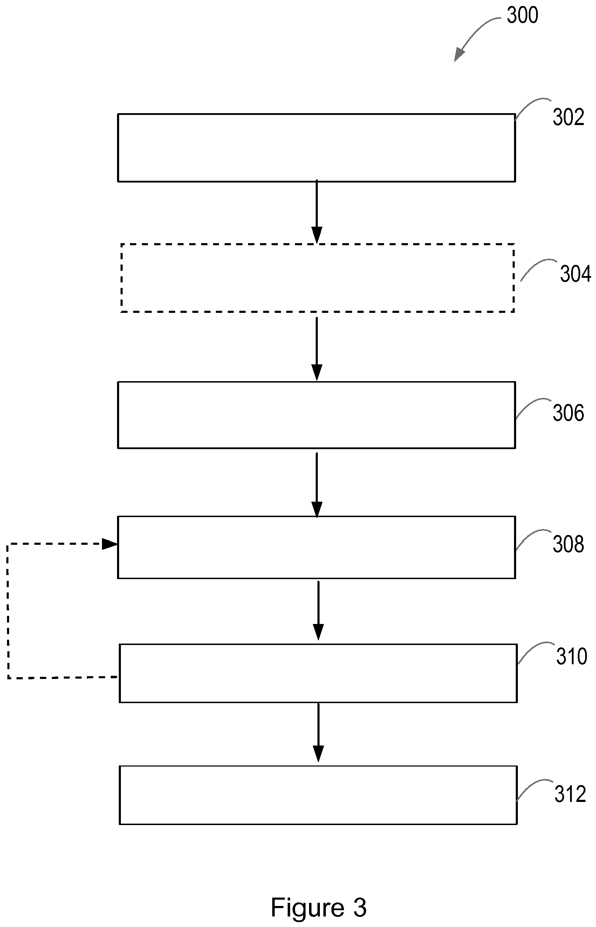

Figure 3 is a flow chart illustrating a method of puffing grain food according to another embodiment. In the described embodiment, the method corresponds to the method shown in Figure 2, but specifically determines a rate of moisture loss from the grain food during the puffing process. Thus, the method 300 may also be controlled by control unit 102 of apparatus 100, but it will be understood that the method maybe controlled separately. In step 302 of method 300, a puffing chamber of a puffing apparatus is pre-heated to a predetermined temperature, before the grain food to be heated is placed into the puffing chamber. Step 304 comprises an optional step of determining an initial moisture content of the grain food to be puffed. Then, in step 306, the grain food is placed into the puffing device. After the grain food has been placed in the pre-heated puffing chamber, in step 308 a rate of moisture loss is determined. Based on the determined rate of moisture loss, the temperature inside the puffing chamber is controlled, in step 310. Optionally, the steps of determining a rate of moisture loss (308) and controlling the temperature (310) are repeated, until a predetermined rate of moisture loss corresponds to a predetermined rate of moisture loss. Finally, in step 312, heating is ended when the predetermined end moisture content of the puffed grain food is achieved.

It will be appreciated that the method described in Figure 3 is suited to the puffing of any grain food product, particularly those mentioned above in connection with Figure 2. In step 302 of the method 300, the puffing chamber of the puffing apparatus is pre-heated to a predetermined temperature or for a predetermined time at a predetermined power as described previously. The pre-heating of the puffing chamber ensures that the rapid, superheating of the grain food to be puffed begins immediately upon the grain food being sealed in the puffing chamber.

In order for a rate of moisture loss to be determined, it is necessary that the initial moisture content of the grain food to be puffed is known. Knowledge of the initial moisture content allows for a controlled puffing process based on a rate of moisture loss, and also on a predetermined or desired end moisture content. In one embodiment, the initial moisture content is predetermined by the producer of the grain food and will be indicated on the packaging. Such pre-packaged grain foods typically have a moisture content of approximately 14 % (on a wt./wt. percentage basis). Thus, in one embodiment, the grain food has an initial moisture content of approximately 14 %. For grain food having an initial moisture content of approximately 14 %, there is no need to pre-treat the grain food to increase moisture content as described above. However, depending on the grain food and user preferences or requirements, it may be necessary to determine the initial moisture content separately, and adjust if required.

Thus, in step 304 of the method 300, optionally, an initial moisture content of the grain food is determined. In one embodiment, the initial moisture content is determined before the grain food is placed in the puffing chamber of the puffing apparatus. In an alternative embodiment, the initial moisture content may be determined based on techniques known in the art, such as measurement of the weight of a sample of the food grain before and after drying in an oven until a constant mass is obtained. In one embodiment, the initial moisture content may be obtained by controlled drying of the grain food, with or without any of the pre-treatments described previously. In one embodiment, an initial moisture content of about 14 % (expressed as a wt./wt. percentage) is desirable. In an alternative embodiment, the initial moisture content of the grain food is determined in the puffing chamber using a sensor. In this embodiment, the order of the steps 302 to 306 may or may not be reversed. In an alternative embodiment to the method shown in Figure 2, the steps of preheating a puffing apparatus (302), determining an initial moisture content (304) and placing the grain food into the puffing device (306) are reversed, and the puffing chamber is pre-heated to a predetermined temperature based on the predetermined initial moisture content. In another embodiment, the initial moisture content may be determined in the puffing chamber after pre-heating. Once the initial moisture content has been determined, a user may input this value into the apparatus as part of the method program. Based on the received user input, a pre-heating temperature and a popping temperature can be determined by a control unit of the apparatus. Alternatively, the apparatus may be provided with an information chart which correlates initial moisture content with suitable pre-heating and popping temperatures, and the user inputs desired pre-heating and popping temperatures into the apparatus.

In step 306 of the method 300, the grain food having a predetermined initial moisture content is placed into and heated in the puffing chamber, with the temperature of the puffing chamber being controlled as described previously.

In step 308 of the method 300, the rate of moisture loss during the puffing process is determined as described previously. In one embodiment, the rate of moisture loss is determined based on the rate of weight loss of the grain food being puffed. In one embodiment, the rate of moisture loss is determined based on the rate of humidity increase in the puffing chamber. In one embodiment, the rate of moisture loss is determined at least every 5 seconds, for example at least every 10 seconds, so that the rate of moisture loss is determined repeatedly during the puffing process.

Once a rate of moisture loss from the grain food being puffed has been determined, the temperature of the puffing chamber is controlled in step 310 of the method 300. For example, when the determined rate of moisture loss exceeds a predetermined rate of moisture loss, the temperature in the puffing apparatus maybe decreased, to decrease the rate of moisture loss. Alternatively, when the determined rate of moisture loss is below a predetermined rate of moisture loss, the temperature in the puffing apparatus maybe increased, to increase the rate of moisture loss. In another embodiment, when the determined rate of moisture loss corresponds to a predetermined rate of moisture loss, the temperature in the puffing chamber may be maintained, to maintain the rate of moisture loss.

Once a rate of moisture loss from the grain food being puffed has been determined, the temperature of the puffing chamber is controlled in step 310 of the method 300 by controlling power supplied to the heating element. For example, when the determined rate of moisture loss exceeds a predetermined rate of moisture loss, the power supplied to the heating element may be decreased, to decrease the rate of moisture loss. Alternatively, when the determined rate of moisture loss is below a predetermined rate of moisture loss, the power supplied to the heating element maybe increased, to increase the rate of moisture loss. In another embodiment, when the determined rate of moisture loss corresponds to a predetermined rate of moisture loss, the power supply to the heating element may be maintained constant, to maintain the temperature and so maintain the rate of moisture loss.

Optionally, steps 308 and 310 of method 300 maybe repeated as required until the determined rate of moisture loss corresponds to the predetermined rate of moisture loss.

Finally, when a predetermined end moisture content of the puffed grain is obtained, the puffing method 300 is terminated in step 312. In one embodiment, termination of the puffing method comprises termination of heating, and a switching off of a power supply providing heating power to the puffing apparatus. Termination of the puffing method may also comprise at least one indicator to the user, for example an audible alarm, or notification on a user interface, that the puffing method is complete.

The results of a series of experiments puffing white rice at different temperatures, at different rates of moisture loss are shown in Table 1 below. As can be seen, the rates of moisture loss are not linear with temperature, with higher temperatures also resulting in discolored product. The moisture contents are shown as wt./wt. percentages.

Table 1

| Initial moisture content | Temp. (°C) | Time (s) | Final moisture content | Moisture loss rate /s | Color |
|---|---|---|---|---|---|
| 14.37% | 200 | 20 | 9.39% | 0.25% | White |
| 14.37% | 230 | 20 | 9.05% | 0.27% | white |
| 14.37% | 260 | 20 | 6.67% | 0.39% | slight yellow |

There is also provided a computer program product comprising a computer readable medium, the computer readable medium having computer readable code embodied therein, the computer readable code being configured such that, on execution by a suitable computer or processor, the computer or processor is caused to perform the method or methods described herein, for example on the apparatus also described herein.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. A method for producing a puffed grain food, the method comprising:

   preheating (202, 302) a puffing apparatus (100);
   placing (206, 306) a grain food to be puffed into the puffing apparatus (100) wherein the grain food has a predetermined initial moisture content;
   determining (208, 308) moisture loss from the grain food in the puffing apparatus (100); and
   controlling the temperature (210, 310) of the puffing apparatus (100) based on the determined moisture loss from the grain food and the predetermined initial moisture content, thereby producing the puffed grain food having a predetermined end moisture content.

2. The method of claim 1, wherein the temperature of the puffing apparatus (100) is controlled (210, 310) until the predetermined end moisture content is obtained.

3. The method of claim 1 or claim 2, wherein the rate of moisture loss is determined (302).

4. The method of claim 3, wherein controlling the temperature (310) of the puffing apparatus (100) comprises one or more of:

   decreasing the temperature when the rate of moisture loss exceeds a predetermined rate of moisture loss;
   increasing the temperature when the rate of moisture loss is below a predetermined rate of moisture loss; and
   maintaining the temperature when the rate of moisture loss corresponds to a predetermined rate of moisture loss.

5. The method of claim 3 or 4, wherein the steps of determining a rate of moisture loss (308) from the grain food, and controlling the temperature (310) of the puffing apparatus (100) based on the determined rate of moisture loss from the grain food, are repeated until the determined rate of moisture loss corresponds to a predetermined rate of moisture loss.

6. The method of any one of claims 3 to 5, wherein the rate of moisture loss is determined by monitoring the weight of the grain food over time or by monitoring the humidity within the puffing apparatus over time.

7. The method of any one of the preceding claims, wherein the grain food comprises a cereal grain or a pellet of grain flour dough.

8. The method of any one of the preceding claims, wherein the grain food to be puffed is pre-treated with one or more of steam, water and heat until the predetermined initial moisture content is obtained.

9. The method of any one of the preceding claims, wherein the puffing apparatus (100) is pre-heated based on the predetermined initial moisture content.

10. The method of any one of the preceding claims, wherein the puffing apparatus (100) is pre-heated to a temperature of at least 140 °C.

11. The method of any one of the preceding claims, wherein the puffing apparatus is pre-heated at a predetermined power input for a predetermined period of time.

12. An apparatus (100) for puffing food, the device comprising:

   a puffing chamber;
   a heating element (110) in thermal contact with the puffing chamber; and
   a sensor (112) disposed within the puffing chamber for determining the moisture loss from a food to be puffed.

13. The apparatus of claim 12, wherein the sensor (112) comprises a weight sensor or a humidity sensor.

14. The apparatus of claim 12 or 13, wherein the apparatus (100) comprises a control unit configured (102) to:

   receive information from the sensor (112);

determine one or more of moisture loss and rate of moisture loss based on the received information;
compare the determined one or more of moisture loss and rate of moisture loss to one or more of a predetermined end moisture content and a predetermined rate of moisture loss respectively; and
control the temperature of the apparatus (100) based on one or more of the comparison of the determined moisture loss to the predetermined end moisture content and the comparison of the determined rate of moisture loss to a predetermined rate of moisture loss.

15. A computer program product comprising a computer readable medium having computer readable code embodied therein, the computer readable code being configured such that, on execution by a control unit of a puffing apparatus for producing puffed grain food, the control unit is caused to perform the method of any one of claims 1 to 11.

Figure 1

200

202

204

206

208

210

212

Figure 2

300

302

304

306

308

310

312

Figure 3

Europäisches
Patentamt

European
Patent Office

Office européen
des brevets

# EUROPEAN SEARCH REPORT

Application Number

EP 17 16 1996

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/205973 A1 (AN RODGER [CN] ET AL) 21 July 2016 (2016-07-21) | 1-15 | INV. A23P30/30 A23L5/10 A23L7/161 A23L7/174 A23L7/183 A21B5/00 G07F17/00 A47J27/00 |
| Y | * paragraphs [0002] - [0005], [0019], [0023], [0026] - [0037]; claims 26, 34; figures 5-9 * | 10 | |
| X | US 2004/104222 A1 (LEE WON-WOO [KR]) 3 June 2004 (2004-06-03) | 1-15 | |
| Y | * paragraphs [0003], [0007] - [0021], [0035], [0038], [0045] - [0051], [0055], [0061]; claims 1-10; figures 3, 4, 7 * | 10 | |
| Y | Gayatri Mishraa ET AL: "Popping and Puffing of Cereal Grains: A Review", Journal of Grain Processing and Storage, 1 December 2014 (2014-12-01), pages 34-46, XP055387525, Retrieved from the Internet: URL:https://www.researchgate.net/profile/Gayatri_Mishra8/publication/283355236_Popping_and_Puffing_of_Cereal_Grains_A_Review/links/5637441d08aebc004000e0d6/Popping-and-Puffing-of-Cereal-Grains-A-Review.pdf [retrieved on 2017-07-04] * page 39, left-hand column, paragraph 1 * | 10 | |

TECHNICAL FIELDS SEARCHED (IPC)

A23P
A23L
A21B
G07F
A47J

The present search report has been drawn up for all claims

| Place of search | Date of completion of the search | Examiner |
|---|---|---|
| Munich | 4 July 2017 | Stiegler, Petra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                         

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 16 1996

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2017

| Patent document cited in search report | Publication date | Patent family member(s) | Publication date |
|---|---|---|---|
| US 2016205973 A1 | 21-07-2016 | EP 3035806 A1<br>US 2016205973 A1<br>WO 2015024177 A1 | 29-06-2016<br>21-07-2016<br>26-02-2015 |
| US 2004104222 A1 | 03-06-2004 | CN 1504688 A<br>EP 1424874 A2<br>JP 4072579 B2<br>JP 2004184060 A<br>KR 20040047083 A<br>US 2004104222 A1 | 16-06-2004<br>02-06-2004<br>09-04-2008<br>02-07-2004<br>05-06-2004<br>03-06-2004 |

EPO FORM P0459

For more details about this annex : see Official Journal of the European Patent Office, No. 12/82